# FASCICULE DE BREVET EUROPEEN

(11) **EP 3 197 974 B1**
(45) Date de publication et mention de la délivrance du brevet: **13.01.2021**
(21) Numéro de dépôt: 15780920.3
(22) Date de dépôt: 21.09.2015
(51) Int. Cl.: C09J 177/02, C09J 177/06, C09J 7/35, C09J 5/06

(54) **COMPOSITION POUR ADHÉSIF THERMOPLASTIQUE, ADHÉSIF THERMOPLASTIQUE, LEURS PROCÉDÉS DE FABRICATION ET LEURS UTILISATIONS**
ZUSAMMENSETZUNG FÜR THERMOPLASTISCHEN KLEBSTOFF, THERMOPLASTISCHER KLEBSTOFF, VERFAHREN ZUR HERSTELLUNG UND VERWENDUNGEN DAVON
COMPOSITION FOR THERMOPLASTIC ADHESIVE, THERMOPLASTIC ADHESIVE, METHODS FOR PRODUCING SAME AND USES THEREOF

(30) Priorité: 23.09.2014 FR 1458974
(43) Date de publication de la demande: 02.08.2017
(73) Titulaire: ARKEMA FRANCE, 92700 Colombes (FR)
(72) Inventeur: PINEAU, Quentin, 27000 Evreux (FR); PAPORE, Emilie, 27670 Bosroumois (FR)
(74) Mandataire: Arkema Patent
(86) Numéro de dépôt international: PCT/FR2015/052518
(87) Numéro de publication internationale: WO 2016/046478

(56) Documents cités:
- EP-A1- 0 147 267
- WO-A1-2014/006353
- FR-A1- 2 303 039
- US-A1- 2005 245 680

## Description

### DOMAINE TECHNIQUE

La présente invention se rapporte à une composition destinée à être utilisée comme adhésif thermoplastique et, plus particulièrement, comme colle thermofusible.

L'invention se rapporte également à un procédé de préparation ainsi qu'aux utilisations d'une telle composition.

L'invention se rapporte enfin à un procédé de fabrication d'un adhésif thermoplastique, à un adhésif thermoplastique susceptible d'être fabriqué à partir d'un tel procédé ainsi qu'à un procédé de fabrication d'un ensemble comprenant une première pièce et un joint collé réticulé, ce joint collé réticulé pouvant être obtenu à partir de cet adhésif thermoplastique ou de la composition mentionnée ci-dessus.

### ÉTAT DE LA TECHNIQUE ANTÉRIEURE

Les colles thermofusibles, couramment désignées par l'expression anglaise "hot melt adhesives" ou son acronyme "HMA", font partie des adhésifs thermoplastiques. De tels adhésifs thermoplastiques présentent la caractéristique d'être sous une forme solide à température ambiante et sous une forme liquide à une température plus élevée. Une telle propriété leur permet d'être largement utilisés comme adhésifs pour solidariser deux substrats et former ce que l'on appelle un "joint collé".

Ces adhésifs thermoplastiques peuvent ainsi être chauffés pour être appliqués sous forme liquide sur le premier substrat. Après mise en place du deuxième substrat sur l'adhésif, on obtient l'adhérence entre ces premier et deuxième substrats, par refroidissement de l'adhésif. Une autre possibilité consiste à disposer, entre les premier et deuxième substrats, l'adhésif sous forme solide, par exemple sous forme de film ou de poudre, à chauffer l'ensemble pour que l'adhésif passe sous forme liquide, l'adhérence étant alors obtenue, comme précédemment, par refroidissement de l'adhésif.

Dans le cadre de la présente invention, on s'intéresse plus particulièrement aux copolyamides, qui sont utilisés comme adhésifs thermoplastiques dans de nombreux domaines, et notamment dans le domaine textile, le domaine électronique et dans le domaine automobile, car ils présentent l'avantage d'adhérer à de nombreux matériaux. Dans la suite de la présente demande, on désignera de tels copolyamides par l'expression "copolyamides HMA".

Ces copolyamides HMA sont classiquement appliqués à des températures supérieures à leur température de fusion.

On comprend toutefois que la tenue thermique d'un adhésif réalisé à partir d'un copolyamide HMA reste limitée par cette température de fusion : en effet, pour une température inférieure d'une dizaine de degrés de la température de fusion du copolyamide HMA considéré, l'adhésif devient mou et, par conséquent, moins adhésif. Ceci est encore plus marqué dès lors que la température de l'environnement atteint ou dépasse cette température de fusion.

Il y a donc un réel besoin de trouver des adhésifs thermoplastiques, et notamment des copolyamides HMA, qui permettent d'obtenir un joint collé dont la tenue thermique est assurée à une température supérieure ou égale à la température de fusion du thermoplastique considéré.

Pour améliorer les performances de ces copolyamides HMA en termes de tenue thermique et, par conséquent, d'adhérence dans des environnements de températures toujours plus élevées, on peut avantageusement procéder à une étape de réticulation du copolyamide après l'étape de collage proprement dite.

La réticulation du copolyamide HMA peut être obtenue par l'addition d'un composé qui va réagir, par traitement thermique, avec certains des groupements fonctionnels du copolyamide HMA et ainsi permettre sa réticulation. Un tel composé, également appelé "co-réactif", peut notamment être un isocyanate, un acrylate, un polysulfure ou encore un polyépoxyde. Toutefois, la plupart de ces co-réactifs présentent l'inconvénient d'être toxiques.

Pour remédier à un tel inconvénient, le document US 2005/0245680 A1, référencé **[1]** à la fin de la présente description, décrit des copolyamides HMA qui se présentent sous la forme de copolyamides branchés à extrémités insaturées. La présence de ces extrémités insaturées permet une réticulation ultérieure relativement aisée des copolyamides, par traitement thermique, rayonnement ou irradiation, en l'absence de co-réactif. De tels copolyamides HMA sont dits "réticulables".

Ces copolyamides branchés à extrémités insaturés sont obtenus par polycondensation, en présence d'au moins un acide monocarboxylique insaturé comme limiteur de chaîne, des monomères usuels formant les copolyamides, au moins un monomère multifonctionnel ayant plus de deux fonctions étant en outre ajouté, soit lors de la polycondensation, soit après la polycondensation.

Plus particulièrement, les copolyamides branchés à extrémités insaturées décrit dans le document **[1]** comprennent :
- au moins un premier motif provenant d'un monomère multifonctionnel ayant plus de deux fonctions,
- au moins un deuxième motif résultant de la condensation, en présence d'au moins un acide monocarboxylique insaturé, d'au moins deux monomères différents et, par exemple :
   - soit d'au moins deux lactames différents,
   - soit d'au moins deux acides alpha,oméga-aminocarboxyliques différents,
   - soit d'au moins un lactame, d'au moins un acide dicarboxylique et d'au moins une diamine,
   - soit d'au moins un acide alpha,oméga-aminocarboxylique, d'au moins un acide dicarboxylique et d'au moins une diamine,
   - soit d'au moins lactame et d'au moins un acide alpha-oméga-aminocarboxylique,
la proportion du monomère multifonctionnel étant inférieure à 9% en poids de l'ensemble du monomère multifonctionnel et des monomères ci-dessus.

Comme indiqué dans le document **[1],** la présence d'au moins un acide monocarboxylique insaturé permet d'introduire plus de deux extrémités insaturées directement dans les motifs formant le copolyamide branché et ce, sans addition de co-réactif, *a fortiori* toxique.

En outre, cette présence de plus de deux extrémités insaturées dans les motifs formant le copolyamide branché conduit, après réticulation, à la formation d'un réseau tridimensionnel à l'origine de l'amélioration des performances du copolyamide branché enseigné dans le document **[1].** La réaction de réticulation est, par ailleurs, rapide et efficace.

Le document **[1]** décrit que la réaction de réticulation peut être réalisée :
- par traitement thermique, en présence de peroxydes comme initiateur, et la source de chaleur pouvant être un rayonnement IR,
- par rayonnement UV, éventuellement en présence de micro-ondes, en utilisant des initiateurs sensibles aux UV, ou encore
- par irradiation, par exemple au moyen de rayonnements bêta ou gamma.

Dans le cas où la réaction de réticulation est initialisée par traitement thermique, le document **[1]** précise que le choix du peroxyde et de la température d'activation permettent de contrôler le moment ainsi que le taux de réticulation souhaités.

Dans la pratique, les copolyamides HMA réticulables décrits dans le document **[1]** sont essentiellement formulés sous la forme d'une poudre ou sous la forme de granulés. Or, la poudre ou les granulés ne permettent pas toujours d'obtenir des adhésifs thermoplastiques d'épaisseur constante. De plus, une poudre ou des granulés de copolyamides HMA réticulables ne sont pas toujours adaptés à la conformation des pièces qu'ils sont destinés à solidariser entre elles. En particulier, il n'est pas envisageable de procéder au dépôt d'une poudre ou de granulés sur une surface présentant des ondulations.

En outre, et notamment pour des raisons évidentes de praticité, il y a une forte demande visant à pouvoir disposer des adhésifs thermoplastiques, non plus sous la forme de poudre ou de granulés, mais sous la forme d'un film ou encore sous la forme d'une nappe, d'un tissu ou encore d'une bande enduit(e) et/ou imprégné(e), ces trois dernières formes étant classiquement désignées par le terme anglais de "web", ce terme étant, par ailleurs, retenu dans la suite de la présente description pour en faciliter la lecture.

S'il est bien entendu tout à fait envisageable de transformer, en particulier par extrusion, les copolyamides HMA réticulables décrits dans le document **[1]** sous la forme d'un film, puis de réaliser l'étape de collage, on rencontre un certain nombre de difficultés à mettre en œuvre l'étape suivante de réticulation.

L'initialisation de la réaction de réticulation au moyen de rayonnements UV est, par exemple, rendue difficile, notamment pour des raisons d'accessibilité des rayonnements UV au niveau du joint collé.

Par ailleurs, dans le cas où l'on envisage d'initialiser la réaction de réticulation par un traitement thermique en association avec un peroxyde, l'apport en peroxyde doit être effectué après l'étape de transformation, le peroxyde étant totalement dégradé sous l'effet de la température d'extrusion des copolyamides HMA réticulables. Or, et sous réserve d'être envisageable compte tenu de la configuration présentée par le joint collé, un tel apport de peroxyde ne pourrait qu'être superficiel. En outre, sous l'effet du traitement thermique, le peroxyde déposé superficiellement aura tendance à s'évaporer, au détriment de la réaction de réticulation.

Quels que soient les moyens mis en œuvre pour initialiser la réaction de réticulation, par rayonnement UV ou par traitement thermique, compte tenu des difficultés mentionnées ci-dessus, la réticulation du joint collé ne pourra pas être obtenue en profondeur dans le joint collé.

Au demeurant, la transformation sous forme de films par extrusion d'une composition comprenant un copolyamide HMA et un co-réactif tel que ceux décrits ci-avant pose également un problème, car les températures, qui sont impliquées pour le mélange à l'état fondu de ces composés lors de cette transformation, conduisent à un début de réaction des composés entre eux, au détriment de la réaction de réticulation opérée par traitement lors d'une étape ultérieure.

Le but de la présente invention est donc de pallier les inconvénients de l'art antérieur et de proposer une composition à base d'au moins un copolyamide HMA qui permette, après réticulation, d'obtenir un joint collé réticulé qui présente une tenue thermique supérieure à la température de fusion dudit copolyamide HMA, cette tenue thermique étant, en outre, renforcée grâce à une réticulation obtenue dans toute l'épaisseur du joint collé.

Cette composition doit, par ailleurs, permettre de fabriquer des adhésifs thermoplastiques qui puissent se présenter sous la forme d'un film ou d'un web, plus facile à utiliser que les granulés ou une poudre.

Un autre but de l'invention est également de proposer un procédé de fabrication d'un adhésif thermoplastique se présentant sous la forme d'un film, continu ou non, ou encore sous la forme d'une nappe, d'un tissu ou d'une bande.

### EXPOSÉ DE L'INVENTION

Les buts précédemment énoncés ainsi que d'autres sont atteints, en premier lieu, par une composition pour adhésif thermoplastique et, en particulier, pour colle thermofusible, cette composition comprenant au moins copolyamide HMA particulier.

Selon l'invention, cette composition comprend une dispersion aqueuse d'au moins un copolyamide branché à extrémités insaturées particulier, à savoir :
- se présentant sous forme de particules telles que le diamètre moyen en volume d₅₀ desdites particules est inférieur ou égal à 50 µm, et
- comportant plus de 50% molaire d'extrémités amines sur le nombre de moles total d'extrémités amines et acides dudit copolyamide branché à extrémités insaturées, parmi lesquelles certaines desdites extrémités amines sont au moins partiellement neutralisées par un acide de Brönsted à base de phosphore de sorte que le ratio molaire entre [acide de Brönsted]/[extrémités amines] est compris entre 0,1 et 5,
la composition selon l'invention comprenant, en outre, au moins un initiateur de réticulation dudit copolyamide branché à extrémités insaturées.

Ainsi, la composition selon l'invention comprend, dans une dispersion aqueuse, un copolyamide HMA réticulable et l'initiateur de réticulation de ce copolyamide HMA réticulable, c'est-à-dire les composés essentiels permettant de former un adhésif thermoplastique ou encore un joint collé puis réticulé.

La manipulation de la composition selon l'invention est plus aisée que celle de granulés ou de poudre et permet une transformation facile sous forme d'un film, par exemple, par simple traitement thermique. En outre, l'initiateur de réticulation étant présent dans la dispersion aqueuse, la réticulation se produit dans toute l'épaisseur du joint collé réalisé à partir de la composition selon l'invention.

Il est précisé que l'expression "compris(e) entre ... et ..." qui vient d'être citée et qui est utilisée dans la présente demande doit être comprise comme définissant non seulement les valeurs de l'intervalle, mais également les valeurs des bornes de cet intervalle.

Par ailleurs, au sens de l'invention, le "diamètre moyen en volume, noté d₅₀" correspond à la taille moyenne de particules telle que présentée par au moins 50% des particules en volume. Ce diamètre moyen en volume d₅₀ est mesuré selon la norme ISO 9276-2 : 2014 (parties 1 à 6 : *"Représentation de données obtenues par analyse granulométrique*").

Le choix d'un tel diamètre moyen pour les particules de copolyamide HMA réticulable combiné avec le choix de proportions molaires spécifiques d'extrémités amines, dont certaines sont en outre partiellement neutralisées par un acide de Brönsted à base de phosphore, s'inscrivant dans les intervalles de valeurs décrits ci-dessus, permettent en effet de former une dispersion aqueuse stable de fines particules de ce copolyamide HMA réticulable, comme enseigné dans le document WO 2014/006353, référence **[2],** dispersion qui comprend en outre au moins un initiateur de réticulation qui permet, par traitement thermique, la réticulation dudit copolyamide HMA réticulable.

Dans une version particulière de l'invention, ce diamètre moyen en volume d₅₀ des particules de copolyamide HMA réticulable est inférieur ou égal à 20 µm, avantageusement inférieur ou égal à 10 µm et, de préférence, compris entre 0,1 µm et 5 µm.

Plus particulièrement, la composition selon l'invention fait le choix d'un copolyamide branché à extrémités insaturés conforme à celui décrit dans le document **[1],** c'est-à-dire un copolyamide qui comporte des insaturations assurant la réticulation ultérieure du copolyamide, en particulier par traitement thermique, en l'absence de co-réactif.

Par "copolyamide" au sens de l'invention, on entend les produits de condensation d'au moins deux monomères distincts reliés entre eux par une fonction amide.

Plus particulièrement, le copolyamide HMA réticulable selon l'invention présente une température de fusion (telle que mesurée par DSC selon la norme ISO 11357-3 : 2013) comprise entre 80°C et 190°C et, avantageusement, entre 100°C et 130°C.

Dans une version avantageuse de l'invention, le copolyamide branché à extrémités insaturées comprend la répétition :
- d'au moins un premier motif provenant d'un monomère multifonctionnel ayant plus de deux fonctions amine(s) et/ou acide(s),
- d'au moins un deuxième motif provenant de la condensation, en présence d'au moins un acide monocarboxylique insaturé, d'au moins deux, et avantageusement d'au moins trois, monomères différents choisis parmi :
   - au moins un acide aminocarboxylique,
   - au moins un lactame,
   - au moins un monomère de type (diamine.diacide) issu de la réaction entre une diamine et un acide dicarboxylique, et
   - leurs mélanges,
avec des monomères ayant un nombre d'atomes de carbone différent dans le cas d'un mélange entre un acide aminocarboxylique et un lactame.

Comme indiqué précédemment, le premier motif du copolyamide branché à extrémités insaturées présent dans la composition selon l'invention provient d'un monomère multifonctionnel ayant plus de deux fonctions amine(s) et/ou acide(s).

Un tel monomère multifonctionnel est un composé avec lequel les monomères du deuxième motif peuvent réagir et se fixer, permettant ainsi la formation des branchements du copolyamide branché à extrémités insaturés.

Dans une variante avantageuse, lorsqu'il comprend plus de deux fonctions amines, ce monomère multifonctionnel peut être choisi dans le groupe constitué par la diéthylènetriamine (DETA), la bis(hexaméthylène)triamine et une polyéthertriamine telle que la Jeffamine®T-403 commercialisée par la société Huntsman.

Dans une autre variante avantageuse, lorsqu'il comprend plus de deux fonctions acides, ce monomère multifonctionnel peut être l'acide mellitique.

Dans une autre variante avantageuse, lorsqu'il comprend plus d'une fonction acide et plus d'une fonction amine, ce monomère multifonctionnel peut être l'acide éthylène diamine tétraacétique (EDTA).

Avantageusement, la proportion massique en monomère multifonctionnel est comprise entre 0,05% et 5% et, préférentiellement, entre 0,05% et 2% de la proportion massique totale de la composition selon l'invention.

Le deuxième motif du copolyamide branché à extrémités insaturées présent dans la composition selon l'invention provient de la condensation, en présence d'au moins un acide monocarboxylique insaturé, d'au moins deux, et avantageusement d'au moins trois, monomères différents, ces monomères étant choisis parmi :
- au moins un acide aminocarboxylique,
- au moins un lactame,
- au moins un monomère de type (diamine.diacide) issu de la réaction entre une diamine et un acide dicarboxylique, et
- leurs mélanges.

Lorsque le monomère est au moins un acide aminocarboxylique, celui-ci peut notamment être un acide α,ω-aminocarboxylique comprenant, avantageusement, entre 4 et 18 atomes de carbone.

De préférence, l'acide aminocarboxylique est choisi parmi l'acide 6-aminocaproïque, l'acide 7-aminoheptanoïque, l'acide 11-aminoundécanoïque et l'acide 12-aminododécanoïque, ainsi que leurs dérivés tels que l'acide N-heptyl-11-aminoundécanoïque.

Lorsque le monomère est au moins un lactame, celui-ci peut notamment être un lactame dont le cycle principal comprend entre 3 et 18 atomes de carbone, ce lactame pouvant par ailleurs être substitué.

Le lactame peut ainsi être choisi parmi l'α,α-diméthylpropriolactame, le β,β-diméthylpropriolactame, l'amylolactame, le caprolactame (aussi appelé lactame 6), le capryllactame (aussi appelé lactame 8), l'œnantholactame et le lauryllactame (aussi appelé lactame 12).

De préférence, le lactame est choisi parmi le caprolactame, le capryllactame et le lauryllactame.

Lorsque le monomère est au moins un monomère issu de la réaction entre une diamine et un acide dicarboxylique, encore dénommé monomère de type (diamine.diacide), la diamine et l'acide dicarboxylique peuvent être respectivement choisis parmi une diamine aliphatique, une diamine cyclique et une diamine aromatique, d'une part, et un acide dicarboxylique aliphatique, un acide dicarboxylique cyclique et un acide dicarboxylique aromatique.

De préférence, la diamine est choisie parmi la butanediamine, la pentanediamine, l'hexanediamine (encore dénommée hexaméthylènediamine ou HMDA), l'heptanediamine, l'octanediamine, la nonanediamine, la 2-méthyl-1,8-nonanediamine, la décanediamine, l'undécanediamine, la dodécanediamine et la tridécanediamine.

Avantageusement, l'acide dicarboxylique est un acide dicarboxylique aliphatique comprenant entre 4 et 36 atomes de carbone.

De préférence, l'acide dicarboxylique est choisi parmi l'acide butanedioïque, l'acide pentanedioïque, l'acide hexanedioïque, l'acide heptanedioïque, l'acide octanedioïque, l'acide azélaïque, l'acide sébacique, l'acide undécanedioïque, l'acide dodécanedioïque et l'acide brassylique.

Le deuxième motif du copolyamide branché à extrémités insaturées peut notamment provenir d'un mélange d'au moins deux, voire trois ou plus, acides aminocarboxyliques, lactames ou monomères de type (diamine.diacide).

Ce deuxième motif peut également provenir du mélange d'au moins deux, voire d'au moins trois ou plus, monomères différents choisis parmi un acide aminocarboxylique, un lactame et/ou un monomère de type (diamine.diacide) issu de la réaction entre une diamine et un acide dicarboxylique, sous réserve d'avoir des monomères ayant un nombre d'atomes de carbone différent dans le cas d'un mélange entre un acide aminocarboxylique et un lactame.

Dans une variante avantageuse de l'invention, le deuxième motif du copolyamide HMA réticulable mis en œuvre dans le cadre de la présente invention peut être choisi parmi les séquences de copolyamide citées au paragraphe [0030] du document **[1].**

Dans une variante particulièrement avantageuse de l'invention, le deuxième motif provient de la condensation des monomères suivants :
- soit du caprolactame, de l'acide 11-aminoundécanoïque et du lauryllactame, le deuxième motif correspondant alors au motif 6/11/12,
- soit du caprolactame, de l'hexanediamine, de l'acide adipique et du lauryllactame, le deuxième motif correspondant alors au motif 6/6.6/12,
- soit du caprolactame, de l'hexanediamine, de l'acide adipique, de l'acide 11-aminoundécanoïque et du lauryllactame, le deuxième motif correspondant alors au motif 6/6.6/11/12.

Dans une version particulière de l'invention, la proportion massique en premier(s) motif(s) est inférieure ou égale à 9% de la proportion massique totale en premier(s) et deuxième(s) motif(s). Avantageusement, cette proportion massique en premier(s) motif(s) est comprise entre 0,05% et 5% et, préférentiellement, entre 0,1% et 2% de la proportion massique totale en premier(s) et deuxième(s) motif(s).

La réaction de condensation des monomères décrits ci-dessus permettant l'obtention du deuxième motif du copolyamide branché à extrémités insaturées est conduite en présence d'au moins un acide monocarboxylique insaturé.

Cet acide monocarboxylique insaturé peut en particulier est choisi parmi les acides monocarboxyliques insaturés décrits au paragraphe [0031] du document **[1].**

Dans une variante particulièrement avantageuse de l'invention, l'acide monocarboxylique insaturé est l'acide crotonique ou l'acide undécylénique.

Dans une version particulière de l'invention, la proportion massique en acide monocarboxylique insaturé est inférieure ou égale à 10% de la proportion massique totale des monomères formant le(s) deuxième(s) motif(s) du(des) copolyamide(s) branché(s) à extrémités insaturées. Avantageusement, cette proportion massique en acide monocarboxylique insaturé est comprise entre 0,5% et 8% de la proportion massique totale des monomères formant ce(s) deuxième(s) motif(s).

La composition selon l'invention comprend en outre au moins un initiateur de réticulation du copolyamide branché à extrémités insaturées. Un tel initiateur de réticulation est un composé générateur de radicaux libres permettant d'initialiser puis de propager la réaction de réticulation du copolyamide branché à extrémités insaturées.

Un tel initiateur de réticulation peut, en particulier, être un peroxyde.

Avantageusement, cet initiateur de réticulation peut être choisi parmi le 2,5-diméthyl-2,5-di(tertiobutylperoxy)hexane et le peroxy-2-éthylhexanoate de tertiobutyle. Ces initiateurs de réticulation sont notamment commercialisés par la société Arkema, respectivement sous les dénominations Luperox®101 et Luperox®26.

Le choix de l'initiateur de réticulation dépend de la température nécessaire pour initialiser la réaction de réticulation. Typiquement le Luperox 101 permet d'envisager une réticulation à une température supérieure ou égale à 160°C.

De préférence, le choix de l'initiateur de réticulation est déterminé de telle sorte que la réaction de réticulation soit initialisée à une température au moins égale à la température de fusion du copolyamide branché à extrémités insaturées et, de manière préférentielle, à une température supérieure à la température de fusion du copolyamide branché à extrémités insaturées.

Dans une variante avantageuse de l'invention, les proportions massiques, données par rapport à la masse totale de ladite composition, sont les suivantes :
- de 0,5% à 60%, avantageusement de 15% à 55% et, préférentiellement, de 30% à 50%, de copolyamide(s) branché(s) à extrémités insaturées,
- de 34% à 99,4%, avantageusement de 39,5% à 83,5% et, préférentiellement, de 45% à 67%, d'un milieu aqueux, et
- de 0,1% à 6%, avantageusement de 1,5% à 5,5% et, préférentiellement, de 3% à 5%, dudit au moins un initiateur de réticulation.

Au sens de l'invention, le "milieu aqueux" est un milieu liquide qui comprend, par rapport à la masse totale dudit milieu aqueux, une proportion massique d'au moins 50% d'eau, avantageusement d'au moins 70% d'eau, de préférence d'au moins 80% d'eau, de préférence encore d'au moins 90% d'eau et, plus préférentiellement encore, de 100% d'eau.

L'eau peut notamment être de l'eau potable, de l'eau adoucie, de l'eau déionisée, de l'eau distillée, de l'eau déminéralisée et/ou de l'eau stérilisée, selon son degré de purification, de l'eau thermale.

À l'exception du cas où il n'est constitué que d'eau, le milieu aqueux peut comprendre un ou plusieurs alcools miscibles avec l'eau, de préférence des alcools dont le nombre d'atomes de carbones de la chaîne carbonée ne dépasse pas 6, tels que l'éthanol, l'isopropanol, un glycol tel que l'éthylène glycol ou le propylène glycol ou un polyol tel que le glycérol ou le sorbitol.

De manière avantageuse, le milieu aqueux a un pH inférieur ou égal à 7, et est, préférentiellement, compris entre 4 et 6,5. Une valeur de pH inférieure peut bien entendu être envisagée. Il est également envisageable de procéder au réajustement de ce pH pour le porter à une valeur particulière donnée.

Avantageusement, les proportions massiques, données par rapport à la masse totale de ladite composition, sont les suivantes :
- de 0,5% à 60% de copolyamide(s) branché(s) à extrémités insaturées,
- de 34% à 99,4%, d'un milieu aqueux, et
- de 0,1% à 6% dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 34% à 99,4%, d'un milieu aqueux, et
- de 1,5% à 5,5% dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 34% à 99,4%, d'un milieu aqueux, et
- de 3% à 5%, dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 39,5% à 83,5% d'un milieu aqueux, et
- de 0,1% à 6% dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 39,5% à 83,5% d'un milieu aqueux, et
- 1,5% à 5,5% dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 39,5% à 83,5% d'un milieu aqueux, et
- de 3% à 5%, dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 45% à 67%, d'un milieu aqueux, et
- de 0,1% à 6% dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 45% à 67%, d'un milieu aqueux, et
- de 1,5% à 5,5% dudit au moins un initiateur de réticulation.

Avantageusement, les proportions massiques, données par rapport à la masse totale de ladite composition, sont les suivantes :
- de 0,5% à 60% de copolyamide(s) branché(s) à extrémités insaturées,
- de 45% à 67%, d'un milieu aqueux, et
- de 3% à 5%, dudit au moins un initiateur de réticulation.

Avantageusement, les proportions massiques, données par rapport à la masse totale de ladite composition, sont les suivantes :
- de 15% à 55% de copolyamide(s) branché(s) à extrémités insaturées,
- de 34% à 99,4% d'un milieu aqueux, et
- de 0,1% à 6% dudit au moins un initiateur de réticulation.

Avantageusement, les proportions massiques, données par rapport à la masse totale de ladite composition, sont les suivantes :
- de 15% à 55% de copolyamide(s) branché(s) à extrémités insaturées,
- de 34% à 99,4% d'un milieu aqueux, et
- de 1,5% à 5,5% dudit au moins un initiateur de réticulation.

Avantageusement, les proportions massiques, données par rapport à la masse totale de ladite composition, sont les suivantes :
- de 15% à 55% de copolyamide(s) branché(s) à extrémités insaturées,
- de 34% à 99,4% d'un milieu aqueux, et
- de 3% à 5%, dudit au moins un initiateur de réticulation.

Avantageusement, les proportions massiques, données par rapport à la masse totale de ladite composition, sont les suivantes :
- 15% à 55% de copolyamide(s) branché(s) à extrémités insaturées,
- de 39,5% à 83,5% d'un milieu aqueux, et
- de 0,1% à 6% dudit au moins un initiateur de réticulation.

Avantageusement, les proportions massiques, données par rapport à la masse totale de ladite composition, sont les suivantes :
- 15% à 55% de copolyamide(s) branché(s) à extrémités insaturées,
- de 39,5% à 83,5% d'un milieu aqueux, et
- de 1,5% à 5,5% dudit au moins un initiateur de réticulation.

Avantageusement, les proportions massiques, données par rapport à la masse totale de ladite composition, sont les suivantes :
- 15% à 55% de copolyamide(s) branché(s) à extrémités insaturées,
- de 39,5% à 83,5% d'un milieu aqueux, et
- de 3% à 5%, dudit au moins un initiateur de réticulation.

Avantageusement, les proportions massiques, données par rapport à la masse totale de ladite composition, sont les suivantes :
- de 15% à 55% de copolyamide(s) branché(s) à extrémités insaturées,
- de 45% à 67%, d'un milieu aqueux, et
- de 0,1% à 6% dudit au moins un initiateur de réticulation.

Avantageusement, les proportions massiques, données par rapport à la masse totale de ladite composition, sont les suivantes :
- de 15% à 55% de copolyamide(s) branché(s) à extrémités insaturées,
- de 45% à 67%, d'un milieu aqueux, et
- de 1,5% à 5,5% dudit au moins un initiateur de réticulation.

Avantageusement, les proportions massiques, données par rapport à la masse totale de ladite composition, sont les suivantes :
- de 15% à 55% de copolyamide(s) branché(s) à extrémités insaturées,
- de 45% à 67%, d'un milieu aqueux, et
- de 3% à 5%, dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 34% à 99,4% d'un milieu aqueux, et
- de 0,1% à 6% dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 34% à 99,4% d'un milieu aqueux, et
- de 1,5% à 5,5% dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 34% à 99,4% d'un milieu aqueux, et
- de 3% à 5%, dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 39,5% à 83,5% d'un milieu aqueux, et
- de 0,1% à 6% dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 39,5% à 83,5% d'un milieu aqueux, et
- de 1,5% à 5,5% dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 39,5% à 83,5% d'un milieu aqueux, et
- de 3% à 5%, dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 45% à 67%, d'un milieu aqueux, et
- de 0,1% à 6% dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 45% à 67%, d'un milieu aqueux, et
- de 1,5% à 5,5% dudit au moins un initiateur de réticulation.

Avantageusement, les proportions massiques, données par rapport à la masse totale de ladite composition, sont les suivantes :
- de 30% à 50%, de copolyamide(s) branché(s) à extrémités insaturées,
- de 45% à 67%, d'un milieu aqueux, et
- de 3% à 5%, dudit au moins un initiateur de réticulation.

Dans une variante avantageuse de l'invention, le milieu aqueux peut, en outre, comprendre au moins un additif choisi parmi un conservateur, un émulsifiant, un épaississant, un colorant, un humectant et un gélifiant. De tels additifs permettent, en effet, d'adapter la rhéologie de la composition selon l'invention en vue des conditions de dépôt de cette composition.

L'addition d'un ou plusieurs additifs dans le milieu aqueux et, par conséquent, dans la composition selon l'invention permet d'adapter la rhéologie de cette composition, notamment à l'épaisseur du joint collé et réticulé désiré et/ou à la conformation des pièces que cette composition est destinée à coller entre elles. En particulier, si au moins l'une de telles pièces présente une surface de collage sensiblement plane et donc continue, une composition fluide peut être suffisante. Dans l'hypothèse où au moins l'une de ces pièces présente une zone de collage discontinue, par exemples du fait de la présence d'ondulations, une composition plus visqueuse peut être nécessaire.

À titre d'exemple, on peut utiliser du polyacétate de vinyle (PVA) qui est un additif présentant simultanément les propriétés d'émulsifiant et d'épaississant.

Les buts précités sont également atteints, en deuxième lieu, par un procédé de préparation d'une composition, cette composition étant telle que définie ci-dessus.

Selon l'invention, ce procédé comprend les étapes successives suivantes :
(a) l'introduction, dans un milieu aqueux, d'au moins un copolyamide branché à extrémités insaturées
   - se présentant sous forme de particules telles que le diamètre moyen en volume d₅₀ desdites particules est inférieur ou égal à 50 µm, et
   - comportant plus de 50% molaire d'extrémités amines sur le nombre de moles total d'extrémités amines et acides dudit copolyamide branché à extrémités insaturées, parmi lesquelles certaines desdites extrémités amines sont au moins partiellement neutralisées par un acide de Brönsted à base de phosphore de sorte que le ratio molaire entre [acide de Brönsted]/[extrémités amines] est compris entre 0,1 et 5,
   moyennant quoi une dispersion aqueuse d'au moins un copolyamide branché à extrémités insaturées est obtenue, et
(b) l'addition, à la dispersion obtenue lors de l'étape (a), d'au moins un initiateur de réticulation dudit copolyamide branché à extrémités insaturées.

Le procédé de fabrication selon l'invention permet donc d'obtenir, par un simple mélange, une composition comprenant les composés essentiels permettant de former, dans une étape ultérieure, un adhésif thermoplastique ou encore un joint collé puis réticulé.

Selon un mode de réalisation particulièrement avantageux de l'invention, les étapes (a) et (b) sont conduites à température ambiante, soit de 20 à 25°C.

Ainsi, le procédé selon l'invention est un procédé à basse température qui présente donc un intérêt majeur en termes d'économie d'énergie. Ce procédé permet non seulement de préparer, mais également de conserver à long terme, à température ambiante une dispersion aqueuse comprenant un copolyamide HMA réticulable et l'initiateur de réticulation de ce copolyamide HMA réticulable. Le mélange du copolyamide HMA réticulable et de l'initiateur de réticulation ne se fait donc pas à l'état fondu, ce qui évite tout risque de dégradation de l'initiateur de réticulation, mais évite également toute réaction parasite entre ces composés, telle que celle observée lors du mélange à l'état fondu d'une composition comprenant un copolyamide HMA et un co-réactif.

Les particules de copolyamide branché à extrémités insaturées telles qu'introduites dans un milieu aqueux ainsi que la dispersion aqueuse telle qu'obtenue à l'issue de l'étape (a) sont avantageusement fabriquées selon les procédés de fabrication décrits dans le document **[2].** Pour la fabrication des particules de copolyamide branché à extrémités insaturées, on peut notamment se reporter au procédé de fabrication détaillé tel que décrit aux paragraphes de la page 16, lignes 3 à 19, de la page 16, ligne 27 à la page 17, ligne 23 du document **[2].** Pour la fabrication de la dispersion aqueuse proprement dite, on peut également se reporter aux paragraphes qui viennent d'être énumérés afin de les lire en combinaison avec les paragraphes de la page 16, lignes 20 à 26 et de la page 17, lignes 25 à 27 du document **[2].**

Comme dans le document **[2],** par "acide de Brönsted à base de phosphore", on entend tout acide comprenant du phosphore et susceptible de céder un proton H⁺ en milieu aqueux. L'acide de Brönsted à base de phosphore comprend au moins l'un des acides choisis parmi l'acide hypophosphoreux H₃PO₂, l'acide phosphoreux H₃PO₃, l'acide phosphorique H₃PO₄, l'acide perphosphorique H₃PO₅ ainsi que leurs dérivés tels que l'hypophosphite de sodium NaH₂PO₂ ou l'hypophosphite de potassium KH₂PO₂, et leurs mélanges. De préférence, l'acide de Brönsted à base de phosphore comprend de l'acide phosphorique et, plus préférablement, est constitué d'acide phosphorique H₃PO₄.

La présente invention a également pour objet l'utilisation d'une composition selon l'invention, telle que définie ci-dessus, pour la fabrication d'un adhésif thermoplastique et, notamment, une colle thermofusible.

Dans une variante particulièrement avantageuse de l'invention, et comme on le verra ci-après, cet adhésif thermoplastique se présente sous forme d'un film, par exemple d'un film continu, mais peut également se présenter sous la forme d'un web, c'est-à-dire d'une nappe, d'un tissu ou encore d'une bande qui a été préalablement enduit(e) et/ou imprégné(e) par la composition selon l'invention.

La présente invention a également pour objet un procédé de fabrication d'un adhésif thermoplastique tel que décrit ci-dessus.

Selon l'invention, ce procédé comprend les étapes successives suivantes :
(a) le dépôt, sur une première pellicule pelable, d'au moins une couche d'une composition telle que décrite ci-dessus,
(b) de manière optionnelle, la mise en place, sur la couche formée lors de l'étape (a), d'une seconde pellicule pelable,
(c) le traitement thermique de la première pellicule pelable, de la couche et, le cas échéant, de la seconde pellicule pelable jusqu'à la température de fusion du copolyamide branché à extrémités insaturées, pour obtenir, après refroidissement, la formation d'un adhésif thermoplastique à partir de la composition selon l'invention, et
(d) de manière optionnelle, le retrait de la première pellicule pelable et, le cas échéant, de la seconde pellicule pelable.

Le dépôt de l'étape (a) peut être avantageusement réalisé de manière à ce que la couche de la composition selon l'invention se présente sous la forme d'un film et, en particulier d'un film continu, présentation que conserve l'adhésif thermoplastique tel qu'obtenu à l'issue de l'étape (c).

Mais on peut également envisager ce dépôt de l'étape (a), par enduction et/ou imprégnation d'une nappe, d'un tissu ou d'une bande par la composition selon l'invention, afin de former un web.

Ces dépôts peuvent notamment être effectués par enduction au moyen d'un pinceau, d'une seringue ou d'un rouleau,.... Ces dépôts peuvent également être effectués par pulvérisation, par exemple au moyen d'un pistolet.

Lors de cette étape (a), on peut ne procéder qu'au dépôt d'une seule couche. Mais on peut tout à fait envisager de procéder au dépôt de plusieurs couches successives afin de disposer d'une épaisseur plus importante d'adhésif thermoplastique, sous la forme d'un film ou d'un web.

Comme indiqué précédemment, le ou les additifs présents dans la composition selon l'invention permettent d'adapter la rhéologie de cette composition, notamment à l'épaisseur de la ou des couches à déposer, épaisseur qui va directement déterminer l'épaisseur finale de l'adhésif thermoplastique que l'on souhaite obtenir.

Lors de l'étape (c), le traitement thermique est réalisé à une température telle que la réaction de réticulation du copolyamide branché à extrémités insaturées ne se produise pas.

Dans une variante avantageuse du procédé selon l'invention, la première pellicule pelable et, le cas échéant, la seconde pellicule pelable, sont réalisées en un matériau comprenant un revêtement antiadhésif pour faciliter le retrait desdites pellicules pelables pour une utilisation ultérieure de l'adhésif thermoplastique.

Ce revêtement antiadhésif peut être, par exemple, en un matériau siliconé.

Les pellicules pelables permettent, entre autres, de protéger l'adhésif thermoplastique entre sa fabrication et son utilisation ultérieure pour solidariser des pièces entre elles.

La présente invention a également pour objet un adhésif thermoplastique.

Selon l'invention, cet adhésif thermoplastique est susceptible d'être obtenu par le procédé de fabrication qui vient d'être défini ci-dessus.

Plus particulièrement, cet adhésif thermoplastique est susceptible d'être fabriqué par le procédé comprenant les étapes successives suivantes :
(a) le dépôt, sur une première pellicule pelable, d'au moins une couche d'une composition telle que décrite ci-dessus,
(b) de manière optionnelle, la mise en place, sur la couche formée lors de l'étape (a), d'une seconde pellicule pelable,
(c) le traitement thermique de la première pellicule pelable, de la couche et, le cas échéant, de la seconde pellicule pelable jusqu'à la température de fusion du copolyamide branché à extrémités insaturées, pour obtenir, après refroidissement, la formation d'un adhésif thermoplastique à partir de la composition selon l'invention, et
(d) de manière optionnelle, le retrait de la première pellicule pelable et, le cas échéant, de la seconde pellicule pelable.

Pour les caractéristiques avantageuses du procédé permettant de fabriquer un tel adhésif thermoplastique, on se réfèrera à ce qui a été défini précédemment.

Dans une version avantageuse selon l'invention, l'adhésif thermoplastique, et notamment ladite au moins une couche, peut se présenter sous la forme d'un film, par exemple d'un film continu. Mais cet adhésif thermoplastique peut également se présenter sous la forme d'un web, c'est-à-dire d'une nappe, d'un tissu ou encore d'une bande qui a été préalablement enduit(e) et/ou imprégné(e) par la composition selon l'invention, en particulier lors de l'étape (a).

La présente invention a enfin pour objet un procédé de fabrication d'un ensemble comprenant une première pièce et un joint collé réticulé.

Selon une première variante, l'ensemble comprend une première pièce et un joint collé réticulé solidarisé à ladite première pièce.

Selon un premier mode de réalisation du procédé de fabrication de cet ensemble selon cette première variante de l'invention, ce procédé comprend les étapes successives suivantes :
(a) le dépôt, sur la première pièce, d'au moins une couche d'une composition telle que décrite ci-dessus,
(b) le traitement thermique de la première pièce et de la couche jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé, et
(c) de manière optionnelle, l'application, sur le joint collé réticulé, d'au moins une couche supplémentaire.

Le joint collé réticulé forme ainsi un revêtement sur ladite première pièce, revêtement qui peut, par exemple, être décoré, auquel cas l'étape (c) pourra avantageusement être mise en œuvre.

Selon un deuxième mode de réalisation du procédé de fabrication de cet ensemble selon cette première variante de l'invention, ce procédé comprenant les étapes successives suivantes, ces étapes étant réalisées à partir d'au moins un adhésif thermoplastique tel que fabriqué par le procédé décrit ci-dessus :
(a) de manière optionnelle, le retrait de la seconde pellicule pelable,
(b) l'application, sur la première pièce, de l'adhésif thermoplastique au niveau de sa face opposée à celle en contact avec la première pellicule pelable,
(c) le retrait de la première pellicule pelable,
(d) le traitement thermique de la première pièce et de la couche jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé, et
(e) de manière optionnelle, l'application, sur le joint collé réticulé, d'au moins une couche supplémentaire.

Selon une deuxième variante, l'ensemble comprend une première pièce et une deuxième pièce, ces première et deuxième pièces étant solidarisées au moyen d'au moins un joint collé réticulé disposé entre elles.

L'ensemble ainsi fabriqué peut n'être constitué que par les première et deuxième pièces et d'un joint collé réticulé. Mais il est bien évident que cet ensemble peut également comprendre plus de deux pièces ainsi qu'un ou plusieurs joints collés réticulés disposés entre lesdites pièces. Ces variantes comprenant respectivement deux et trois pièces sont notamment illustrées dans les exemples de réalisation décrits ci-après.

Selon un premier mode de réalisation du procédé de fabrication de l'ensemble selon cette deuxième variante de l'invention, ce procédé comprend les étapes successives suivantes :
(a) le dépôt, sur la première pièce, d'au moins une couche d'une composition telle que décrite ci-dessus,
(b) la mise en place, sur la couche formée lors de l'étape (a), de la deuxième pièce,
(c) le traitement thermique de la première pièce, de la couche et de la deuxième pièce jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé.

Le procédé selon l'invention permet, en un nombre d'étapes particulièrement restreint, d'obtenir un joint collé réticulé. En effet, lors de l'étape (c), le traitement thermique permet, par une augmentation progressive de la température, d'éliminer l'eau de la composition selon l'invention, puis de condenser les monomères et de former le copolyamide branché à extrémités insaturées et, enfin, de réticuler ledit copolyamide branché.

La première pièce recevant la couche de la composition selon l'invention peut présenter une surface de collage qui peut être lisse ou rugueuse, continue, par exemple sensiblement plane ou, au contraire, discontinue, par exemple lorsqu'elle présente des ondulations.

Comme indiqué précédemment, le ou les additifs présents dans la composition selon l'invention permettent d'adapter la rhéologie de la composition selon l'invention, notamment à l'épaisseur de la ou des couches à déposer et/ou aux modes d'application de cette composition, qui peut notamment dépendre de la conformation des pièces destinées à être solidarisées par collage.

Dans une variante avantageuse du procédé selon l'invention, le traitement thermique de l'étape (c) est réalisé par une augmentation progressive de la température, de manière à successivement permettre l'évaporation de l'eau présente dans la composition, puis la fusion du copolyamide branché à extrémités insaturées suivie, enfin, de la réticulation de ce copolyamide.

Selon un deuxième mode de réalisation du procédé de fabrication de l'ensemble selon cette deuxième variante de l'invention, ce procédé comprenant les étapes successives suivantes, ces étapes étant réalisées à partir d'au moins un adhésif thermoplastique tel que fabriqué par le procédé décrit ci-dessus :
(a) de manière optionnelle, le retrait de la seconde pellicule pelable,
(b) l'application, sur la première pièce, de l'adhésif thermoplastique au niveau de sa face opposée à celle en contact avec la première pellicule pelable,
(c) le retrait de la première pellicule pelable,
(d) le dépôt de la deuxième pièce, sur la face de l'adhésif thermoplastique,
(e) le traitement thermique de la première pièce, de la couche et de la deuxième pièce jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé

Dans ce deuxième mode de réalisation, on réalise ce qui est couramment appelé un contre-collage. En l'espèce, un adhésif thermoplastique a été fabriqué selon le procédé décrit ci-avant.

D'autres caractéristiques et avantages de l'invention apparaîtront à la lecture du complément de description qui suit, qui se rapporte à un exemple de préparation de deux compositions selon l'invention, à la fabrication de deux ensembles comprenant chacun deux pièces, ces pièces étant solidarisées au moyen d'un joint collé réticulé disposé entre elles ainsi qu'à des résultats expérimentaux illustrant les excellentes propriétés d'adhérence des éléments constitutifs de ces ensembles.

Bien entendu, ces exemples ne sont donnés qu'à titre d'illustration de l'objet de l'invention et ne constituent en aucun cas une limitation de cet objet.

### EXPOSÉ DÉTAILLÉ DE MODES DE RÉALISATION PARTICULIERS

### 1. Préparation de compositions selon l'invention

Pour la préparation de deux compositions C₁ et C₂ selon l'invention, on a tout d'abord synthétisé des particules de copolyamide branché à extrémités insaturées.

### Préparation des particules de copolyamide branché à extrémités insaturées

Un copolyamide 6/6.6/12 branché à extrémités insaturées a été préparé à partir des proportions massiques des différents composés suivants :
- 40% de caprolactame, 11,1% d'hexaméthylènediamine (HMDA), 13,9% d'acide adipique et 35% de lauryllactame permettant l'obtention du deuxième motif 6/6.6/12,
- 4,18% d'acide undécylénique comme acide monocarboxylique insaturé,
- 0,6% d'hexaméthylènediamine (HMDA),
- 0,23% de diéthylènetriamine (DETA) comme monomère multifonctionnel permettant l'obtention du premier motif, et
- 0,1% d'acide phosphorique H₃PO₄ comme acide de Brönsted,

étant précisé que les proportions massiques en acide undécylénique, en HDMA, en DETA et en H₃PO₄ sont données par rapport à la proportion massique totale des composés (monomères) permettant l'obtention du deuxième motif 6/6.6/12.

### Préparation du copolyamide 6/6.6/12 branché à extrémités insaturées

Dans un autoclave de 4L muni d'un agitateur de type ancre, sont introduits 480 g de caprolactame, 140,4 g (soit 133,2 g + 7,2 g) d'hexaméthylènediamine, 178,8 g d'acide adipique, 420 g de lauryllactame, 50,2 g d'acide undécylénique, 2,8 g de diéthylènetriamine, 1,2 g d'acide phosphorique et 50 g d'eau. Le milieu est inerté en faisant le vide puis en introduisant de l'azote 4 fois de suite. Puis le milieu réactionnel est mis en chauffe et sous pression autogène jusqu'à une température matière de 280°C pendant 2 h. Puis la pression est abaissée jusqu'à la pression atmosphérique et la température matière est portée à 250°C. Un vide (inférieur à 100 mbar) est alors appliqué. Le milieu se viscosifie et la synthèse est arrêtée jusqu'à atteindre le couple d'agitation souhaitée.

Le copolymère branché à extrémités insaturées ainsi préparé présente une viscosité inhérente de 0,6 et une Tf comprise entre 115°C et 125°C. Sa teneur en fins de chaine acide est de 0,012 meq/g et sa teneur en fins de chaine amine est de 0,060 meq/g.

### Préparation de la dispersion de copolyamide 6/6.6/12 branché à extrémités insaturées

Dans un autoclave de 1L muni d'une agitation type turbine à 6 pales inclinées à 45°C, sont introduits 266,7 g du copolyamide branché à extrémités insaturées tel que préparé ci-dessus, 400 g d'eau déionisée et 4,7 g d'acide phosphorique.

Le milieu est agité sous une vitesse de 1000 tr/min et chauffé jusqu'à une température matière de 150°C pendant 3 h. Puis le milieu est refroidi et, lorsque la température atteint 120°C, la vitesse est abaissée à 300 tr/min. Lorsque la température matière atteint 50°C, le milieu est vidangé.

Une suspension blanche stable du copolyamide est ainsi obtenue. Le pH de cette suspension est de 3,5 et le diamètre moyen en volume d₅₀ des particules est de 5,6 µm.

### Préparation de deux compositions C₁ et C₂ selon l'invention

La composition C₁ selon l'invention a été préparée par mélange des proportions massiques des composés suivants :
- 31,2% des particules du copolyamide 6/6.6/12 branché à extrémités insaturées telles que préparées ci-dessus,
- 67,6% d'eau,
- 0,6% de polyacétate de vinyle PVA comme additif (épaississant), et
- 0,6% de Luperox 101 comme initiateur de réticulation.

La composition C₁ ainsi obtenue présente une texture de pâte fluide. Elle permet, en particulier, de réaliser un collage tout à fait satisfaisant de deux pièces planes entre elles.

La composition C₂ selon l'invention a été préparée par mélange des proportions massiques des composés suivants :
- 49,5% des particules du copolyamide 6/6.6/12 branché à extrémités insaturées telles que préparées ci-dessus,
- 50,0% d'eau, et
- 0,5% de Luperox 101 comme initiateur de réticulation.

La composition C₂ ainsi obtenue présente une texture de pâte plus visqueuse que la composition C₁.

### 2. Fabrication d'un adhésif thermoplastique selon l'invention

On a procédé à la fabrication d'un adhésif thermoplastique conforme à l'invention. A titre de pellicule pelable, on a utilisé une feuille de papier revêtue d'une couche de revêtement antiadhésif à base de polytétrafluoroéthylène (PTFE), dite "feuille téflonnée".

On a réalisé le dépôt, sur cette feuille téflonnée, d'une première couche de la composition C₁ telle que préparée conformément au paragraphe 1 ci-dessus, au moyen d'une barre pour obtenir une première couche d'une épaisseur régulière et homogène de 120 µm. On observe que cette première couche de composition C₁ ne se rétracte pas après dépôt.

La feuille téflonnée revêtue de la première couche de composition C₁ est ensuite placée dans une étuve à 123°C pendant 10 minutes.

Après retrait de l'étuve, on réalise le dépôt, sur la première couche, d'une deuxième couche de la composition C₁ de 120 µm d'épaisseur au moyen d'une barre (comme pour le dépôt de la première couche ci-dessus), puis on place de nouveau l'ensemble constitué par la pellicule pelable et les première et deuxième couches dans l'étuve à 123°C pendant 10 minutes.

Après retrait de cet ensemble de l'étuve, on obtient un adhésif thermoplastique se présentant sous la forme d'un film continu transparent d'une épaisseur de 100 µm, qui se détache très facilement de la feuille téflonnée. Les passages successifs dans l'étuve de la feuille téflonnée revêtue provoquent l'évaporation de l'eau et, par conséquent, la diminution de l'épaisseur totale du film.

### 3. Fabrication de deux ensembles selon l'invention et leur évaluation en tenue thermique

On a réalisé deux ensembles comprenant chacun deux pièces solidarisées entre elles au moyen d'un joint collé réticulé.

* Pour la fabrication du premier ensemble, noté E₁, les pièces utilisées sont constituées par deux plaques planes identiques, en aluminium et de dimensions 50 mm x 150 mm x 5 mm.

Pour la fabrication de cet ensemble E₁, la composition C₂ a été déposée, au moyen d'un pinceau, sur l'une des faces de la première plaque pour former une couche.

La première plaque et la couche de composition C₂ ont été portées à une température de 145°C pour permettre l'évaporation de l'eau de la composition C₂ puis la fusion des particules de copolyamide 6/6.6/12 branché à extrémités insaturées.

Ces étapes de dépôt puis de traitement thermique ont été reproduites quatre fois, permettant ainsi d'obtenir, à partir de la composition C₂, une couche d'adhésif thermoplastique d'une épaisseur totale de 1 mm.

La deuxième plaque a ensuite été déposée sur ladite une couche d'adhésif thermoplastique.

Les première et deuxième plaques ainsi que la couche d'adhésif thermoplastique ont ensuite été portées à une température de 165°C pour permettre la réticulation du copolyamide 6/6.6/12 branché à extrémités insaturées et l'obtention de l'ensemble E₁.

La tenue thermique de cet ensemble E₁ a été validée en disposant ledit ensemble E₁ dans une étude portée progressivement de 100°C à 165°C. On observe, en effet, qu'aucun fluage ne se produit sous l'effet d'un poids de 5 kg maintenu pendant 15 min à 165°C.

Le procédé de fabrication qui vient d'être décrit pour la fabrication de l'ensemble E₁ peut bien entendu être réalisé pour solidariser, au moyen d'une couche d'adhésif thermoplastique telle que décrite ci-dessus, des pièces autres que des pièces métalliques planes, comme des pièces métalliques non planes, qui peuvent par exemple présenter des ondulations, ou encore des pièces en tissu, notamment en coton.

* Pour la fabrication du deuxième ensemble, noté E₂, les pièces utilisées sont constituées par deux morceaux d'un même tissu de coton et présentant les dimensions suivantes : 50 mm x 150 mm x 100 µm.

Pour la fabrication de cet ensemble E₂, l'adhésif thermoplastique sous forme de film continu transparent d'une épaisseur de 100 µm, tel que fabriqué à partir de la composition C₁ conformément au protocole détaillé au paragraphe 2 ci-avant, a été placé sur l'une des faces du premier morceau de tissu en coton. On a alors procédé au dépôt, sur cet adhésif thermoplastique, du deuxième morceau de tissu en coton.

Les premier et deuxième morceaux de tissu ainsi que l'adhésif thermoplastique ont ensuite été thermo-scellés, en étant portés à une température de 165°C, pendant un durée de 10 min et sous une pression de 2 bar, pour permettre la réticulation du copolyamide 6/6.6/12 branché à extrémités insaturées et l'obtention de l'ensemble E₂.

La tenue thermique de cet ensemble E₂ a été validée en disposant ledit ensemble E₂ dans une étude portée progressivement de 160°C à 180°C, pendant 24 h. Là encore, on observe qu'aucun fluage ne se produit sous l'effet d'un poids de 5 kg maintenu pendant 15 min à 165°C.

Comme précédemment, le procédé qui vient d'être décrit pour la fabrication de l'ensemble E₂ peut bien entendu être réalisé pour solidariser, au moyen de l'adhésif thermoplastique sous forme de film continu tel que décrit ci-dessus, des pièces autres que des pièces en tissu, par exemple des pièces métalliques, de telles pièces pouvant être planes ou non.

### BIBLIOGRAPHIE

**[1]** US 2005/0245680 A1
**[2]** WO 2014/006353 A1

## Revendications

1. Composition pour adhésif thermoplastique, ladite composition comprenant une dispersion aqueuse d'au moins un copolyamide branché à extrémités insaturées, ledit copolyamide branché à extrémités insaturées :
- se présentant sous forme de particules telles que le diamètre moyen en volume d₅₀ desdites particules est inférieur ou égal à 50 µm, et
- comportant plus de 50% molaire d'extrémités amines sur le nombre de moles total d'extrémités amines et acides dudit copolyamide branché à extrémités insaturées, parmi lesquelles certaines desdites extrémités amines sont au moins partiellement neutralisées par un acide de Brönsted à base de phosphore de sorte que le ratio molaire entre [acide de Brönsted]/[extrémités amines] est compris entre 0,1 et 5,
ladite composition comprenant, en outre, au moins un initiateur de réticulation dudit copolyamide branché à extrémités insaturées.

2. Composition selon la revendication 1, dans laquelle le copolyamide branché à extrémités insaturées comprend la répétition :
- d'au moins un premier motif provenant d'un monomère multifonctionnel ayant plus de deux fonctions amine(s) et/ou acide(s),
- d'au moins un deuxième motif provenant de la condensation, en présence d'au moins un acide monocarboxylique insaturé, d'au moins deux, et avantageusement d'au moins trois, monomères différents choisis parmi :
• au moins un acide aminocarboxylique,
• au moins un lactame,
• au moins un monomère de type (diamine.diacide) issu de la réaction entre une diamine et un acide dicarboxylique, et
• leurs mélanges,
avec des monomères ayant un nombre d'atomes de carbone différent dans le cas d'un mélange entre un acide aminocarboxylique et un lactame.

3. Composition selon la revendication 2, dans laquelle le monomère multifonctionnel est choisi dans le groupe constitué par la diéthylènetriamine, la bis(hexaméthylène)triamine, une polyéthertriamine, l'acide mellitique et l'acide éthylène diamine tétraacétique et/ou l'acide aminocarboxylique est un acide alpha,oméga-aminocarboxylique comprenant entre 4 et 18 atomes de carbone et, de préférence, est choisi parmi l'acide 6-aminocaproïque, l'acide 7-aminoheptanoïque, l'acide 11-aminoundécanoïque, l'acide N-heptyl-11-amino-undécanoïque et l'acide 12-aminododécanoïque.

4. Composition selon l'une quelconque des revendications 2 à 3, dans laquelle le lactame est un lactame dont le cycle principal comprend entre 3 et 18 atomes de carbone et, de préférence, est choisi parmi le caprolactame, le capryllactame et le lauryllactame et/ou la diamine est une diamine aliphatique comprenant entre 4 et 36 atomes de carbone et l'acide dicarboxylique est un acide dicarboxylique aliphatique comprenant entre 4 et 36 atomes de carbone.

5. Composition selon l'une quelconque des revendications 1 à 4, dans laquelle le deuxième motif est choisi parmi le motif 6/11/12, le motif 6/6.6/12 et le motif 6/6.6/11/12.

6. Composition selon l'une quelconque des revendications 2 à 5, dans laquelle l'acide monocarboxylique insaturé est l'acide crotonique ou l'acide undécylénique et/ou l'initiateur de réticulation est un peroxyde et, de préférence, est le 2,5-diméthyl-2,5-di(tertiobutylperoxy)hexane.

7. Composition selon l'une quelconque des revendications 1 à 6, dans laquelle les proportions massiques, données par rapport à la masse totale de ladite composition, sont les suivantes :
- de 0,5% à 60%, avantageusement de 15% à 55% et, préférentiellement, de 30% à 50%, de copolyamide(s) branché(s) à extrémités insaturées,
- de 34% à 99,4%, avantageusement de 39,5% à 83,5% et, préférentiellement, de 45% à 67%, d'un milieu aqueux, le milieu aqueux comprenant de préférence une proportion massique, par rapport à la masse totale du milieu aqueux d'au moins 50% en eau, et a un pH inférieur ou égal à 7, et, préférentiellement, entre 4 et 6,5
et
- de 0,1% à 6%, avantageusement de 1,5% à 5,5% et, préférentiellement, de 3% à 5%, dudit au moins un initiateur de réticulation.

8. Procédé de préparation d'une composition selon l'une quelconque des revendications 1 à 7, ledit procédé comprenant les étapes successives suivantes :
(a) l'introduction, dans un milieu aqueux, d'au moins un copolyamide branché à extrémités insaturées
- se présentant sous forme de particules telles que le diamètre moyen en volume d₅₀ desdites particules est inférieur ou égal à 50 µm, et
- comportant plus de 50% molaire d'extrémités amines sur le nombre de moles total d'extrémités amines et acides dudit copolyamide branché à extrémités insaturées, parmi lesquelles certaines desdites extrémités amines sont au moins partiellement neutralisées par un acide de Brönsted à base de phosphore de sorte que le ratio molaire entre [acide de Brönsted]/[extrémités amines] est compris entre 0,1 et 5,
moyennant quoi une dispersion aqueuse d'au moins un copolyamide branché à extrémités insaturées est obtenue, et
(b) l'addition, à la dispersion obtenue lors de l'étape (a), d'au moins un initiateur de réticulation dudit copolyamide branché à extrémités insaturées,
les étapes (a) et (b) étant avantageusement conduites à température ambiante, de 20 à 25°C.

9. Utilisation d'une composition selon l'une quelconque des revendications 1 à 7 pour la fabrication d'un adhésif thermoplastique et, notamment, une colle thermofusible.

10. Procédé de fabrication d'un ensemble comprenant une première pièce et un joint collé réticulé solidarisé à ladite première pièce, ledit procédé comprenant les étapes successives suivantes :
(a) le dépôt, sur la première pièce, d'au moins une couche d'une composition selon l'une quelconque des revendications 1 à 7,
(b) le traitement thermique de la première pièce et de la couche jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé, et
(c) de manière optionnelle, l'application, sur le joint collé réticulé, d'au moins une couche supplémentaire.

11. Procédé de fabrication d'un ensemble comprenant une première pièce et une deuxième pièce, ces première et deuxième pièces étant solidarisées au moyen d'un joint collé réticulé disposé entre elles, ledit procédé comprenant les étapes successives suivantes :
(a) le dépôt, sur la première pièce, d'au moins une couche d'une composition selon l'une quelconque des revendications 1 à 7,
(b) la mise en place, sur la couche formée lors de l'étape (a), de la deuxième pièce,
(c) le traitement thermique de la première pièce, de la couche et de la deuxième pièce jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé.

12. Procédé de fabrication d'un adhésif thermoplastique, ledit procédé comprenant les étapes successives suivantes :
(a) le dépôt, sur une première pellicule pelable, d'au moins une couche d'une composition selon l'une quelconque des revendications 1 à 7,
(b) de manière optionnelle, la mise en place, sur la couche formée lors de l'étape (a), d'une seconde pellicule pelable,
(c) le traitement thermique de la première pellicule pelable, de la couche et, le cas échéant, de la seconde pellicule pelable jusqu'à la température de fusion du copolyamide branché à extrémités insaturées, pour obtenir après refroidissement, la formation d'un adhésif thermoplastique à partir de la composition, et
(d) de manière optionnelle, le retrait de la première pellicule pelable et, le cas échéant, de la seconde pellicule pelable,
la première pellicule pelable et, le cas échéant, la seconde pellicule pelable, étant de préférence réalisées en un matériau comprenant un revêtement antiadhésif, par exemple, en un matériau siliconé.

13. Adhésif thermoplastique susceptible d'être fabriqué par le procédé selon la revendication 12, dans lequel ladite au moins une couche se présentant de préférence sous la forme d'un film, d'une nappe, d'un tissu ou d'une bande.

14. Procédé de fabrication d'un ensemble comprenant une première pièce et un joint collé réticulé solidarisé à ladite première pièce, ledit procédé comprenant les étapes successives suivantes réalisées à partir d'au moins un adhésif thermoplastique selon la revendication 13 :
(a) de manière optionnelle, le retrait de la seconde pellicule pelable,
(b) l'application, sur la première pièce, de l'adhésif thermoplastique au niveau de sa face opposée à celle en contact avec la première pellicule pelable,
(c) le retrait de la première pellicule pelable,
(d) le traitement thermique de la première pièce et de la couche jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé, et
(e) de manière optionnelle, l'application, sur le joint collé réticulé, d'au moins une couche supplémentaire.

15. Procédé de fabrication d'un ensemble comprenant une première pièce et une deuxième pièce, ces première et deuxième pièces étant solidarisées au moyen d'un joint collé réticulé disposé entre elles, ledit procédé comprenant les étapes successives suivantes réalisées à partir d'au moins un adhésif thermoplastique selon la revendication 13 :
(a) de manière optionnelle, le retrait de la seconde pellicule pelable,
(b) l'application, sur la première pièce, de l'adhésif thermoplastique au niveau de sa face opposée à celle en contact avec la première pellicule pelable,
(c) le retrait de la première pellicule pelable,
(d) le dépôt de la deuxième pièce, sur la face de l'adhésif thermoplastique,
(e) le traitement thermique de la première pièce, de la couche et de la deuxième pièce jusqu'à la température de fusion du copolyamide branché à extrémités insaturées pour obtenir la formation d'un joint collé puis au-delà de la température de fusion du copolyamide branché à extrémités insaturées, pour obtenir la réticulation du joint collé.

## Patentansprüche

1. Zusammensetzung für thermoplastischen Klebstoff, wobei die Zusammensetzung eine wässrige Dispersion aus mindestens einem verzweigten Copolyamid mit ungesättigten Enden umfasst, wobei das verzweigte Copolyamid mit ungesättigten Enden:
- in Form von Teilchen derart vorliegt, dass der mittlere volumetrische Durchmesser d₅₀ der Teilchen kleiner gleich 50 µm ist, und
- mehr als 50 Mol-% Aminenden auf die Gesamtstoffmenge an Amin- und Säureenden des verzweigten Copolyamids mit ungesättigten Enden aufweist, wobei von den Aminenden bestimmte Aminenden zumindest teilweise mit einer Brönsted-Säure auf Phosphorbasis derart neutralisiert sind, dass das Molverhältnis zwischen [Brönsted-Säure]/[Aminenden] zwischen 0,1 und 5 liegt,
wobei die Zusammensetzung ferner mindestens einen Initiator für die Vernetzung des verzweigten Copolyamids mit ungesättigten Enden umfasst.

2. Zusammensetzung nach Anspruch 1, wobei das verzweigte Copolyamid mit ungesättigten Enden die Wiederholung:
- aus mindestens einer ersten Einheit aus einem mehrfunktionellen Monomer mit mehr als zwei funktionellen Amin- und/oder Säuregruppen und
- aus mindestens einer zweiten Einheit umfasst, die aus der Kondensation, in Gegenwart von mindestens einer ungesättigten Monocarbonsäure, von mindestens zwei und vorteilhafterweise mindestens drei unterschiedlichen Monomeren stammt, die ausgewählt sind aus:
• mindestens einer Aminocarbonsäure,
• mindestens einem Lactam,
• mindestens einem Monomer vom Typ (Diamin.Disäure) aus der Reaktion zwischen einem Diamin und einer Dicarbonsäure, und
• ihren Mischungen,
wobei die Monomere im Fall einer Mischung zwischen einer Aminocarbonsäure und einem Lactam eine unterschiedliche Anzahl an Kohlenstoffatomen aufweisen.

3. Zusammensetzung nach Anspruch 2, wobei das mehrfunktionelle Monomer aus der Gruppe ausgewählt ist, die aus Diethylentriamin, Bis(hexamethylen)triamin, einem Polyethertriamin, Mellitsäure und Ethylendiamintetraessigsäure besteht, und/oder die Aminocarbonsäure eine alpha,omega-Aminocarbonsäure ist, die zwischen 4 und 18 Kohlenstoffatomen umfasst und vorzugsweise aus 6-Aminocapronsäure, 7-Aminoheptansäure, 11-Aminoundecansäure, N-Heptyl-11-Aminoundecansäure und 12-Aminododecansäure ausgewählt ist.

4. Zusammensetzung nach Anspruch 2 oder 3, wobei das Lactam ein Lactam ist, dessen Hauptring zwischen 3 und 18 Kohlenstoffatomen umfasst und das vorzugsweise aus Caprolactam, Capryllactam und Lauryllactam ausgewählt ist, und/oder wobei das Diamin ein aliphatisches Diamin ist, das zwischen 4 und 36 Kohlenstoffatomen umfasst, und die Dicarbonsäure eine aliphatische Dicarbonsäure ist, die zwischen 4 und 36 Kohlenstoffatomen umfasst.

5. Zusammensetzung nach einem der Ansprüche 1 bis 4, wobei die zweite Einheit aus der Einheit 6/11/12, der Einheit 6/6.6/12 und der Einheit 6/6.6/11/12 ausgewählt ist.

6. Zusammensetzung nach einem der Ansprüche 2 bis 5, wobei die ungesättigte Monocarbonsäure Crotonsäure oder Undecylensäure ist und/oder der Initiator für die Vernetzung ein Peroxid ist und vorzugsweise 2,5-Dimethyl-2,5-di(tertiobutylperoxy)hexan ist.

7. Zusammensetzung nach einem der Ansprüche 1 bis 6, wobei die Massenanteile, angegeben bezogen auf die Gesamtmasse der Zusammensetzung, folgendermaßen sind:
- 0,5% bis 60%, vorteilhafterweise 15% bis 55% und bevorzugt 30% bis 50% verzweigte(s) Copolyamid(e) mit ungesättigten Enden,
- 34% bis 99,4%, vorteilhafterweise 39,5% bis 83,5% und bevorzugt 45% bis 67% eines wässrigen Mediums, wobei das wässrige Medium bevorzugt einen Massenanteil bezogen auf die Gesamtmasse des wässrigen Mediums von mindestens 50% in Wasser umfasst und einen pH-Wert von kleiner gleich 7 und vorzugsweise zwischen 4 und 6,5 aufweist
und
- 0,1% bis 6%, vorteilhafterweise 1,5% bis 5,5% und bevorzugt 3% bis 5% des mindestens einen Initiators für die Vernetzung.

8. Verfahren zur Herstellung einer Zusammensetzung nach einem der Ansprüche 1 bis 7, wobei das Verfahren folgende aufeinanderfolgende Schritte umfasst:
(a) Einbringen, in ein wässriges Medium, von mindestens einem verzweigten Copolyamid mit ungesättigten Enden,
- in Form von derartigen Teilchen, dass der mittlere volumetrische Durchmesser d₅₀ der Teilchen kleiner gleich 50 µm ist, und
- das mehr als 50 Mol-% Aminenden auf die Gesamtstoffmenge an Amin- und Säureenden des verzweigten Copolyamids mit ungesättigten Enden aufweist, wobei von den Aminenden bestimmte Aminenden zumindest teilweise mit einer Brönsted-Säure auf Phosphorbasis derart neutralisiert sind, dass das Molverhältnis zwischen [Brönsted-Säure]/[Aminenden] zwischen 0,1 und 5 liegt,
wobei eine wässrige Dispersion von mindestens einem verzweigten Copolyamid mit ungesättigten Enden erhalten wird, und
(b) Zugeben von mindestens einem Initiator für die Vernetzung des verzweigten Copolyamids mit ungesättigten Enden zu der in Schritt (a) erhaltenen Dispersion,
wobei Schritt (a) und (b) vorteilhafterweise bei Umgebungstemperatur, von 20 bis 25°C, durchgeführt werden.

9. Verwendung einer Zusammensetzung nach einem der Ansprüche 1 bis 7 für die Herstellung eines thermoplastischen Klebstoffs und insbesondere eines Schmelzklebstoffs.

10. Verfahren zur Herstellung einer Anordnung, die ein erstes Teil und eine vernetzte Klebeverbindung umfasst, die fest mit dem ersten Teil verbunden ist, wobei das Verfahren folgende aufeinanderfolgende Schritte umfasst:
(a) Aufbringen, auf das erste Teil, von mindestens einer Schicht aus einer Zusammensetzung nach einem der Ansprüche 1 bis 7,
(b) Wärmebehandlung des ersten Teils und der Schicht bis zur Schmelztemperatur des verzweigten Copolyamids mit ungesättigten Enden, damit die Ausbildung einer Klebeverbindung erreicht wird, dann über die Schmelztemperatur des verzweigten Copolyamid mit ungesättigten Enden hinaus, damit die Vernetzung der Klebeverbindung erreicht wird, und
(c) optional Auftragen von mindestens einer zusätzlichen Schicht auf die vernetzte Klebeverbindung.

11. Verfahren zur Herstellung einer Anordnung, die ein erstes Teil und ein zweites Teil umfasst, wobei dieses erste und zweite Teil mit einer dazwischen angeordneten vernetzten Klebeverbindung fest miteinander verbunden sind, wobei das Verfahren folgende aufeinanderfolgende Schritte umfasst:
(a) Aufbringen, auf das erste Teil, von mindestens einer Schicht aus einer Zusammensetzung nach einem der Ansprüche 1 bis 7,
(b) Platzieren des zweiten Teils auf der in Schritt (a) gebildeten Schicht,
(c) Wärmebehandlung des ersten Teils, der Schicht und des zweiten Teils bis zur Schmelztemperatur des verzweigten Copolyamid mit ungesättigten Enden, damit die Ausbildung einer Klebeverbindung erreicht wird, dann über die Schmelztemperatur des verzweigten Copolyamids mit ungesättigten Enden hinaus, damit die Vernetzung der Klebeverbindung erreicht wird.

12. Verfahren zur Herstellung eines thermoplastischen Klebstoffs, wobei das Verfahren folgende aufeinanderfolgende Schritte umfasst:
(a) Aufbringen, auf einer ersten abziehbaren Folie, von mindestens einer Schicht aus einer Zusammensetzung nach einem der Ansprüche 1 bis 7,
(b) optional Platzieren einer zweiten abziehbaren Folie auf der in Schritt (a) gebildeten Schicht,
(c) Wärmebehandlung der ersten abziehbaren Folie, der Schicht und gegebenenfalls der zweiten abziehbaren Folie bis zur Schmelztemperatur des verzweigten Copolyamids mit ungesättigten Enden, damit nach dem Abkühlen die Ausbildung eines thermoplastischen Klebstoffs aus der Zusammensetzung erreicht wird, und
(d) optional Entfernen der ersten abziehbaren Folie und gegebenenfalls der zweiten abziehbaren Folie,
wobei die erste abziehbare Folie und gegebenenfalls die zweite abziehbare Folie vorzugsweise aus einem Material gefertigt sind, das eine Antihaftbeschichtung umfasst, beispielsweise aus einem Silikonmaterial.

13. Thermoplastischer Klebstoff, der sich mit dem Verfahren nach Anspruch 12 herstellen lässt, wobei die mindestens eine Schicht vorzugsweise in Form eines Films, einer Bahn, eines Gewebes oder eines Streifens vorliegt.

14. Verfahren zur Herstellung einer Anordnung, die ein erstes Teil und eine vernetzte Klebeverbindung umfasst, die fest mit dem ersten Teil verbunden ist, wobei das Verfahren folgende aufeinanderfolgende Schritte umfasst, die ausgehend von mindestens einem thermoplastischen Klebstoff nach Anspruch 13 durchgeführt werden:
(a) optional Entfernen der zweiten abziehbaren Folie,
(b) Auftragen des thermoplastischen Klebstoffs auf dem ersten Teil im Bereich der Fläche, die der Fläche im Kontakt mit der ersten abziehbaren Folie gegenüberliegt,
(c) Entfernen der ersten abziehbaren Folie,
(d) Wärmebehandlung des ersten Teils und der Schicht bis zur Schmelztemperatur des verzweigten Copolyamids mit ungesättigten Enden, damit die Ausbildung einer Klebeverbindung erreicht wird, dann über die Schmelztemperatur des verzweigten Copolyamid mit ungesättigten Enden hinaus, damit die Vernetzung der Klebeverbindung erreicht wird, und
(e) optional Auftragen von mindestens einer zusätzlichen Schicht auf die vernetzte Klebeverbindung.

15. Verfahren zur Herstellung einer Anordnung, die ein erstes Teil und ein zweites Teil umfasst, wobei dieses erste und zweite Teil mit einer dazwischen angeordneten vernetzten Klebeverbindung fest miteinander verbunden sind, wobei das Verfahren folgende aufeinanderfolgende Schritte umfasst, die ausgehend von mindestens einem thermoplastischen Klebstoff nach Anspruch 13 durchgeführt werden:
(a) optional Entfernen der zweiten abziehbaren Folie,
(b) Auftragen des thermoplastischen Klebstoffs auf dem ersten Teil im Bereich der Fläche, die der Fläche im Kontakt mit der ersten abziehbaren Folie gegenüberliegt,
(c) Entfernen der ersten abziehbaren Folie,
(d) Aufbringen des zweiten Teils auf der Fläche des thermoplastischen Klebstoffs,
(e) Wärmebehandlung des ersten Teils, der Schicht und des zweiten Teils bis zur Schmelztemperatur des verzweigten Copolyamids mit ungesättigten Enden, damit die Ausbildung einer Klebeverbindung erreicht wird, dann über die Schmelztemperatur des verzweigten Copolyamids mit ungesättigten Enden hinaus, damit die Vernetzung der Klebeverbindung erreicht wird.

## Claims

1. Composition for thermoplastic adhesive, said composition comprising an aqueous dispersion of at least one branched copolyamide with unsaturated ends, said branched copolyamide with unsaturated ends:
- being in the form of particles such that the volume-average diameter d₅₀ of said particles is less than or equal to 50 µm, and
- comprising more than 50 mol% of amine ends relative to the total number of moles of amine and acid ends of said branched copolyamide with unsaturated ends, among which certain of said amine ends are at least partially neutralized by a phosphorus-based Brønsted acid so that the molar ratio [Brønsted acid]/[amine ends] is between 0.1 and 5,
said composition further comprising at least one initiator of crosslinking of said branched copolyamide with unsaturated ends.

2. Composition according to Claim 1, wherein the branched copolyamide with unsaturated ends comprises repetition:
- of at least one first unit derived from a polyfunctional monomer having more than two amine and/or acid functions,
- of at least one second unit derived from the condensation, in the presence of at least one unsaturated monocarboxylic acid, of at least two, and advantageously of at least three, different monomers selected from:
• at least one aminocarboxylic acid,
• at least one lactam,
• at least one monomer of the (diamine.diacid) type resulting from reaction between a diamine and a dicarboxylic acid, and
• mixtures thereof,
with monomers having a different number of carbon atoms in the case of a mixture of an aminocarboxylic acid and a lactam.

3. Composition according to Claim 2, wherein the polyfunctional monomer is selected from the group consisting of diethylenetriamine, bis(hexamethylene)triamine, a polyether triamine, mellitic acid and ethylenediaminetetraacetic acid and/or the aminocarboxylic acid is an alpha,omega-aminocarboxylic acid comprising between 4 and 18 carbon atoms, and preferably is selected from 6-aminocaproic acid, 7-aminoheptanoic acid, 11-aminoundecanoic acid, N-heptyl-11-amino-undecanoic acid and 12-aminododecanoic acid.

4. Composition according to either one of Claims 2 and 3, wherein the lactam is a lactam whose main ring comprises between 3 and 18 carbon atoms, and preferably is selected from caprolactam, capryllactam and lauryllactam and/or the diamine is an aliphatic diamine comprising between 4 and 36 carbon atoms and the dicarboxylic acid is an aliphatic dicarboxylic acid comprising between 4 and 36 carbon atoms.

5. Composition according to any one of Claims 1 to 4, wherein the second unit is selected from the unit 6/11/12, the unit 6/6.6/12 and the unit 6/6.6/11/12.

6. Composition according to any one of Claims 2 to 5, wherein the unsaturated monocarboxylic acid is crotonic acid or undecylenic acid and/or the crosslinking initiator is a peroxide, and is preferably 2,5-dimethyl-2,5-di(tert-butylperoxy)hexane.

7. Composition according to any one of Claims 1 to 6, wherein the proportions by weight, relative to the total weight of said composition, are as follows:
- from 0.5% to 60%, advantageously from 15% to 55%, and preferably from 30% to 50% of branched copolyamide(s) with unsaturated ends,
- from 34% to 99.4%, advantageously from 39.5% to 83.5%, and preferably from 45% to 67% of an aqueous medium, the aqueous medium preferably comprising a proportion by weight, relative to the total weight of the aqueous medium, of at least 50% of water, and having a pH less than or equal to 7, and preferably between 4 and 6.5, and
- from 0.1% to 6%, advantageously from 1.5% to 5.5%, and preferably from 3% to 5% of said at least one crosslinking initiator.

8. Method for preparing a composition according to any one of Claims 1 to 7, said method comprising the following successive steps:
(a) adding, to an aqueous medium, at least one branched copolyamide with unsaturated ends
- being in the form of particles such that the volume-average diameter d₅₀ of said particles is less than or equal to 50 µm, and
- comprising more than 50 mol% of amine ends relative to the total number of moles of amine and acid ends of said branched copolyamide with unsaturated ends, among which certain of said amine ends are at least partially neutralized by a phosphorus-based Brønsted acid so that the molar ratio [Brønsted acid]/[amine ends] is between 0.1 and 5,
by means of which an aqueous dispersion of at least one branched copolyamide with unsaturated ends is obtained, and
(b) adding, to the dispersion obtained in step (a), at least one initiator of crosslinking of said branched copolyamide with unsaturated ends,
steps (a) and (b) advantageously being carried out at room temperature, from 20 to 25°C.

9. Use of a composition according to any one of Claims 1 to 7 for manufacturing a thermoplastic adhesive, and notably a hot-melt adhesive.

10. Method for fabricating an assembly comprising a first part and a crosslinked glued joint made integral with said first part, said method comprising the following successive steps:
(a) depositing, on the first part, at least one layer of a composition according to any one of Claims 1 to 7,
(b) thermal treatment of the first part and of the layer up to the melting point of the branched copolyamide with unsaturated ends to obtain formation of a glued joint, and then above the melting point of the branched copolyamide with unsaturated ends, to obtain crosslinking of the glued joint, and
(c) optionally, application, on the crosslinked glued joint, of at least one additional layer.

11. Method for fabricating an assembly comprising a first part and a second part, these first and second parts being joined together by means of a crosslinked glued joint arranged between them, said method comprising the following successive steps:
(a) depositing, on the first part, at least one layer of a composition according to any one of Claims 1 to 7,
(b) placing the second part on the layer formed in step (a),
(c) thermal treatment of the first part, of the layer and of the second part up to the melting point of the branched copolyamide with unsaturated ends to obtain formation of a glued joint, and then above the melting point of the branched copolyamide with unsaturated ends, to obtain crosslinking of the glued joint.

12. Method for manufacturing a thermoplastic adhesive, said method comprising the following successive steps:
(a) depositing, on a first peelable film, at least one layer of a composition according to any one of Claims 1 to 7,
(b) optionally, placing a second peelable film on the layer formed in step (a),
(c) thermal treatment of the first peelable film, of the layer and, if applicable, of the second peelable film up to the melting point of the branched copolyamide with unsaturated ends, to obtain, after cooling, formation of a thermoplastic adhesive starting from the composition, and
(d) optionally, removing the first peelable film and, if applicable, the second peelable film,
the first peelable film and, if applicable, the second peelable film, preferably being produced in a material comprising a non-stick coating, for example, in a silicone material.

13. Thermoplastic adhesive that can be manufactured by the method according to Claim 12, wherein said at least one layer is preferably in the form of a film, a layer, a fabric or a tape.

14. Method for fabricating an assembly comprising a first part and a crosslinked glued joint made integral with said first part, said method comprising the following successive steps carried out starting from at least one thermoplastic adhesive according to Claim 13:
(a) optionally, removal of the second peelable film,
(b) application, on the first part, of the thermoplastic adhesive on its face opposite that in contact with the first peelable film,
(c) removal of the first peelable film,
(d) thermal treatment of the first part and of the layer up to the melting point of the branched copolyamide with unsaturated ends to obtain formation of a glued joint, and then above the melting point of the branched copolyamide with unsaturated ends, to obtain crosslinking of the glued joint, and
(e) optionally, application, on the crosslinked glued joint, of at least one additional layer.

15. Method for fabricating an assembly comprising a first part and a second part, these first and second parts being joined together by means of a crosslinked glued joint arranged between them, said method comprising the following successive steps carried out starting from at least one thermoplastic adhesive according to Claim 13:
(a) optionally, removal of the second peelable film,
(b) application, on the first part, of the thermoplastic adhesive on its face opposite that in contact with the first peelable film,
(c) removal of the first peelable film,
(d) placing the second part on the face of the thermoplastic adhesive,
(e) thermal treatment of the first part, of the layer and of the second part up to the melting point of the branched copolyamide with unsaturated ends to obtain formation of a glued joint, and then above the melting point of the branched copolyamide with unsaturated ends, to obtain crosslinking of the glued joint.
